Europäisches Patentamt

European Patent Office

Office européen des brevets

(11) Publication number: **0 157 467**
**B1**

(12) **EUROPEAN PATENT SPECIFICATION**

(45) Date of publication of patent specification: **27.04.88**

(51) Int. Cl.⁴: **B 60 T 15/04**

(21) Application number: **85300306.9**

(22) Date of filing: **17.01.85**

(54) Multi-circuit fluid pressure control valve.

(30) Priority: **28.01.84 GB 8402295**

(43) Date of publication of application:
**09.10.85 Bulletin 85/41**

(45) Publication of the grant of the patent:
**27.04.88 Bulletin 88/17**

(84) Designated Contracting States:
**BE DE FR IT NL SE**

(56) References cited:
**GB-A- 823 160**
**GB-A-2 019 516**

(73) Proprietor: **BENDIX LIMITED**
**Douglas Road**
**Kingswood, Bristol BS15 2NL (GB)**

(72) Inventor: **Fogg, Stephen Walter**
**37 Millmead Road**
**Bath BA2 3JP (GB)**
Inventor: **Bennett, Martin John**
**44 Charlton Road**
**Kingswood Bristol BS15 1HB (GB)**

(74) Representative: **Turner, Alan Reginald**
**c/o Bendix Limited Douglas Road**
**Kingswood, Bristol BS15 2NL (GB)**

Courier Press, Leamington Spa, England.

## Description

This invention relates to multi-circuit fluid pressure control valve assemblies and relates especially but not exclusively to dual circuit fluid pressure brake control valves.

It is common to employ compressed air braking systems on heavy commercial and passenger carrying road vehicles the brake being controllable by a driver's foot operable valve. The driver's foot valve is usually designed to provide two separate but nonetheless usually equal output pressures for independent braking circuits of the vehicle. In some such vehicles relatively soft springing is utilised both in the front vehicle suspension itself and also in the driver's seat mountings and it is found that with certain combinations of such springing and braking force exerted by driver's foot there is a tendency for instability or oscillation to occur in the foot valve which manifests itself in the vibration of the foot pedal and results in pulsed venting of the braking systems by the foot valve with resultant loss of compressed air from reservoirs supplying the valve. The object of the present invention is to provide an improved multi-circuit fluid pressure control valve.

According to the present invention there is provided a multi-circuit fluid pressure control valve assembly including a housing, a first double valve for controlling a connection between a first output port and a first input port or a vent port, a second double valve for controlling a connection between a second output port and a second input port or a vent port, the respective output ports being connected opposingly to respective pressurable areas of a pair of mutually resiliently interacting pressure responsive members, e.g. as disclosed in GB—A—823 160, whereby increasing output pressures urge the pressure members together, characterised by said members carrying mutually relatively displaceable parts which define a variable restriction between at least one said double valve and the respective vent port and which acts in a sense to more appreciably impede venting when the pressure members are urged together.

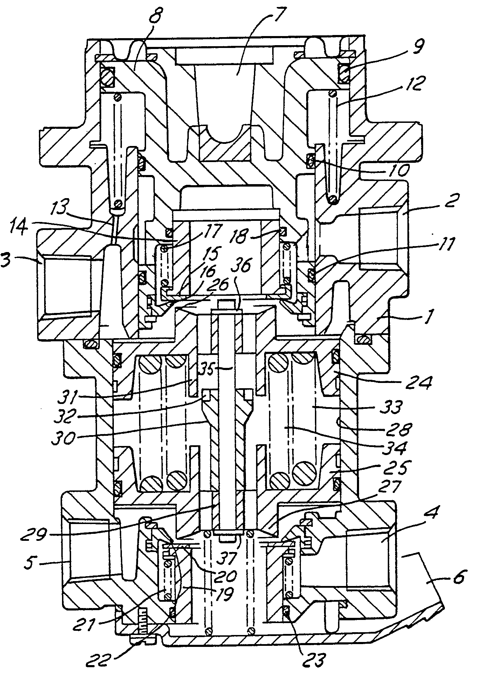

In order that the present invention may be more clearly understood and readily carried into effect, the same will be further described by way of example with reference to the accompanying drawing which illustrates by way of example one embodiment of a dual-circuit fluid pressure control valve assembly in accordance with the invention.

Referring to the single Fig., the multi-circuit fluid pressure control valve assembly comprises a housing denoted by reference 1 having a first fluid pressure input port denoted by reference 2, a first fluid pressure output port 3, a second fluid pressure input port 4, a second fluid pressure output port 5 and a fluid pressure vent port 6. The dual circuit valve is controlled by the force exerted by a driver's foot pedal engageable with a socket 7 in an input piston 8 which carries seals 9, 10 and 11 sealingly slideable in the housing and is urged into the position shown by a return spring 12. The region between the seal 9 and the seal 10 provides an annular pressure responsive area on the piston which acts in the same direction as the spring 12 and has communicated therewith fluid pressure from the output port 3 via a passage 13. The input port 2 communicates with the region between the seals 10 and 11 of the input piston for supply of pressure from a reservoir connected to the port 2 to a double valve arrangement carried in the piston. The double valve arrangement consists of a tubular member 14 with a double valve member 15 urged into engagement with an inlet valve seat 16 by virtue of a light spring 17. The tubular member 14 is sealingly slideable in the piston by virtue of a seal 18 which isolates the input pressure from an axially arranged vent passage.

Referring now to the lower part of the valve assembly, a further double valve is provided input pressure to which is derived from the input port 4. This double valve comprises a tubular member 19 carrying a double valve member 20 urged by a spring 21 into engagement with a valve seat 22 retained in the lower part of the housing. Again the tubular member 19 is provided with a seal 23 whereby it is sealingly slideable but separates the input port 4 from the vent passage. Exhaust valve seats from the double valves are identically provided on a pair of mutually opposing resiliently separated pressure responsive members in the form of pistons 24 and 25 the vent valve seat for the first circuit double valve being denoted by reference 26 and the vent valve seat for the second circuit double valve being represented by reference 27. These pistons freely slide on a guide rod 35 with end stops 36 and 37, against which the pistons are normally held by separating springs 33, 34. These pistons are also mutually sealingly slideable in the bore portion 28 of the housing, vented air from port 3 passing between unseated valve member 15 and seat 26 being able to pass down axially through both pistons to reach the vent port 6.

The piston 25 carries in its central web 29 an upwardly extending flow restriction member 30 which is mutually co-operable with a downwardly extending tubular portion 31 of the upper piston 24. The upper end of 30 is cut away to form peripheral castellations 32 whereby when the piston 24 and 25 have moved closer together a substantially increasing air flow restriction is provided for air being vented from the port 3 via the first circuit double valve.

In operation of the dual circuit valve assembly, the first and second input ports 2 and 4 are respectively connected to separate reservoirs and the output ports 3 and 5 are connected to separate braking circuits of a vehicle. In the normal running position as shown and with no pressure exerted by the driver on the foot pedal, the output port 3 is vented by the valve member 15 being unseated from the vent valve seat 26 and the output port 5 is vented by the valve member 20 being unseated from the vent valve seat 27. When the driver wishes to apply the service brakes his foot is pressed against the pedal which urges the piston 8 in a downward direction whereby the vent valve seat 26 of the first circuit valve is engageable by the valve member 15 thereby sealing off the output port 3 from atmosphere and due to the upward reaction exerted by piston 24 a slight further downward movement of piston 8 causes unseating of the valve member 15 from the input valve seat 16 to provide communication between the reservoir connected to port 2 and the port 3. The downward force exerted by the valve member 15 and the increasing pressure now acting on the upper surface of the piston 24 causes slight downward movement of this piston and downward force is thereby exerted via the separating springs 33 and 34 to the lower piston 25 which acts in a substantially identical manner to the first circuit double valve to provide output pressure at the port 5 accompanied by an upward reaction on the underside of piston 25. When the opposing pressures on pistons 24 and 25 sufficiently compress the springs 33 and 34 the double valves each lap into a condition where the inlet and vent valves are respectively closed and stable output pressures are produced at ports 3 and 5. Further downward movement of the piston 8 by the driver to increase the braking results in increasing stable pressure at ports 3 and 5.

With such pressure applied at ports 3 and 5 it will be appreciated that the pistons 24 and 25 have been moved together against the resilience of springs 33 and 34 and that the upper end of the member 30 will have moved into closer relationship with the downwardly extending portion 31 of piston 24. Accordingly, upon reduction by the driver of the force exerted on the pedal accompanied by a slight upward movement of the piston 8, there is an immediate tendency for compressed air being applied at port 3 to rush in the return direction through the now unseated vent valve 26, 15 of the first circuit double valve. However, by virtue of the close relationship between the upper end of 30 and the downward extending part 31, such outward rush of air towards the vent port 6 is appreciably impeded and a tendency for instability and possible oscillation of the system is thereby appreciably reduced. However, in the event the driver completely removes the force from the pedal whereby the piston 8 returns to the starting position shown, air is permitted to be vented from the port 3 virtually unimpeded to the output port 6. Similarly, complementary pressure reduction occurs via the second circuit valve the output pressure from which acts on the underside of piston 25. Furthermore, it will be appreciated that by virtue of the balanced relationship between pistons 24 and 25 and the associated valve seats 26 and 27, by impeding the outflow of air via the first circuit vent valve the outflow of air via the second circuit vent valve tends to be attenuated in sympathy.

The precise position of the piston 8 for which the restriction between 30 and 31 becomes effective is determined by the preload which is set into the springs 33 and 34 by the stops on the inner guide rod 33 and this and the component dimensions can be set to enable the choke to be effective down to whatever output pressure may be desired. However, for the purposes of a dual foot valve for a braking system the arrangement may preferably be such that the relative positions of the end of portion 31 and the bases of the castellations 32 are such that they align following some compression of springs 33 and 34, to close the restriction which restriction is maintained down to about 1 bar in a subsequent pressure releasing mode.

In an alternative, the part 30 could be carried by the piston 24 and the part 31 could be carried by the piston 25.

## Claims

1. A multi-circuit fluid pressure control valve assembly including a housing (1), a first double valve (15) for controlling a connection between a first output port (3) and a first input port (2) or a vent port (6), a second double valve (20) for controlling a connection between a second output port (5) and a second input port (4) or a vent port (6), the respective output ports (3, 5) being connected opposingly to respective pressurable areas of a pair of mutually resiliently interacting pressure responsive members (24, 25), whereby increasing output pressures urge the pressure members together, characterised by said members (24, 25) carrying mutually relatively displaceable parts (31, 32) which define a variable restriction between at least one said double valve and the respective vent port and which acts in a sense to more appreciably impede venting when the pressure members are urged together.

2. A multi-circuit fluid pressure control valve as claimed in claim 1, characterised by the first double valve (15) being carried by a piston (8) moveable in the housing and an exhaust valve seat (26) for said double valve being carried by a first of said pressure responsive members (24), said restriction being effective in a tubular portion (31) leading from said exhaust valve seat.

3. A multi-circuit fluid pressure control valve as claimed in claim 1, characterised by the first double valve being carried by a piston (8) moveable in the housing and an exhaust valve seat for said double valve being carried by a first of said pressure responsive members (24) said second double valve (20) being located in the housing and an exhaust valve seat (27) for said second double valve being carried by the other (25) of said pressure responsive members, said restriction being effective in a tubular portion leading from said latter exhaust valve seat.

4. A multi-circuit fluid pressure control valve assembly as claimed in claims 1, 2 or 3 characterised by one said mutually displaceable part comprising a tubular portion (31) and the other mutually displaceable part comprising a restriction member (30) moveable into the tubular portion.

5. A multi-circuit fluid pressure control valve assembly as claimed in claim 4, characterised by the restriction member (30) having one or more peripheral castellations (32) the bases of which move sufficiently out of the proximity of the tubular portion (31) to substantially alleviate the restriction of the tubular portion (31).

6. A multi-circuit fluid pressure control valve as claimed in any preceding claim characterised in that the dimensions and a resilient preload (33, 34) between said pressure responsive members are such that in operation for increasing output pressures the restriction is defined in accordance with the output pressure attained before opening of a said double valve to release the output pressure.

**Patentansprüche**

1. Mehrkreis-Druckmittelsteuerventilvorrichtung, umfassend ein Gehäuse (1), ein erstes Doppelventil (15) zum Steuern einer Verbindung zwischen einer ersten Ausgangsöffnung (3) und einer ersten Eingangsöffnung (2) oder einer Entlüftungsöffnung (6), ein zweites Doppelventil (20) zum Steuern einer Verbindung zwischen einer zweiten Ausgangsöffnung (5) und einer zweiten Eingangsöffnung (4) oder einer Entlüftungsöffnung (6), wobei die betreffenden Ausgangsöffnungen (3, 5) entgegengesetzt mit betreffenden unter Druck setzbaren Bereichen eines Paares von gegenseitig federnd zusammenwirkenden auf Druck ansprechenden Teilen (24, 25) verbunden sind, wobei sich erhöhende Ausgangsdrücke die Druckteile gegeneinander drücken, dadurch gekennzeichnet, daß die genannten Teile (24, 25) gegenseitig relativ verschiebbare Teile (31, 32) tragen, welche eine variable Verengung zwischen wenigstens dem genannten einen Doppelventil und der betreffenden Entlüftungsöffnung bestimmen und welche in einem Sinn wirken, ein Entlüften merkbarer zu behindern, wenn die Druckteile gegeneinander gedrückt werden.

2. Mehrkreis-Druckmittelsteuerventil nach Anspruch 1, dadurch gekennzeichnet, daß das erste Doppelventil (15) von einem Kolben (8) getragen ist, der in dem Gehäuse bewegbar ist, und ein Auslaßventilsitz (26) für das genannte Doppelventil von einem ersten der auf Druck ansprechenden Teile (24) getragen ist, und die Verengung in einem rohrförmigen Teil (31) wirksam ist, der von dem Auslaßventilsitz ausgeht.

3. Mehrkreis-Druckmittelsteuerventil nach Anspruch 1, dadurch gekennzeichnet, daß das erste Doppelventil von einem Kolben (8) getragen ist, der in dem Gehäuse bewegbar ist, und ein Auslaßventilsitz für das genannte Doppelventil von einem ersten der auf Druck ansprechenden Teile (24) getragen ist, das zweite Doppelventil (20) in dem Gehäuse angeordnet ist und ein Auslaßventilsitz (27) für das zweite Doppelventil von dem anderen (25) der auf Druck ansprechenden Teile getragen ist und die Verengung in einem rohrförmigen Teil wirksam ist, der von dem zuletzt genannten Auslaßventilsitz ausgeht.

4. Mehrkreis-Druckmittelsteuerventilvorrichtung nach den Ansprüchen 1, 2 oder 3, dadurch gekennzeichnet, daß der eine der gegenseitig verschiebbaren Teile einen rohrförmigen Teil (31) aufweist und der andere gegenseitig verschiebbare Teil ein Verengungsglied (30) aufweist, welches in dem rohrförmigen Teil bewegbar ist.

5. Mehrkreis-Druckmittelsteuerventilvorrichtung nach Anspruch 4, dadurch gekennzeichnet, daß das Verengungsglied (30) eine oder mehrere zinnenartige Umfangsausbildungen (32) hat, deren Basen sich ausreichend weit aus der Nähe des rohrförmigen Teiles (31) bewegen, um die Verengung des rohrförmigen Teiles (31) wesentlich zu verringern.

6. Mehrkreis-Druckmittelsteuerventil nach irgendeinem der vorhergehenden Ansprüche, dadurch gekennzeichnet, daß die Abmessungen und eine federnde Vorbelastung (33, 34) zwischen den auf Druck ansprechenden Teilen derart sind, daß im Betrieb für sich erhöhende Ausgangsdrücke die Verengung definiert ist in Übereinstimmung mit einem erreichten Ausgangsdruck, bevor ein genanntes Doppelventil öffnet, um den Ausgangsdruck freizugeben.

**Revendications**

1. Ensemble de soupape de commande de pression de fluide pour systèmes multi-circuits, comprenant un carter (1), une première soupape double (15) pour commander un raccordement entre un premier orifice de sortie (3) et un premier orifice d'entrée (2) ou un orifice d'échappement d'air (6), une seconde soupape double (20) pour commander un raccordement entre un second orifice de sortie (5) et un second orifice d'entrée (4) ou un orifice d'échappement d'air (6), les orifices de sortie respectifs (3, 5) étant raccordés en opposition à des surfaces respectives, exposées à la pression, d'une paire d'éléments (24, 25) sensibles à la pression agissant élastiquement l'un sur l'autre, de sorte que des pressions de sortie croissantes poussent les éléments sensibles à la pression l'un vers l'autre, caractérisé en ce que lesdits éléments (24, 25) portent des pièces (31, 32) mutuellement déplaçables l'une par rapport à l'autre, qui définissent un étranglement variable entre au moins une desdites soupapes doubles et l'orifice d'échappement d'air respectif et qui agit dans le sens de faire obstacle plus nettement à l'échappement d'air lorsque les éléments sensibles à la pression sont poussés l'un vers l'autre.

2. Soupape de commande de pression de fluide pour systèmes multi-circuits suivant la revendication 1, caractérisée en ce que la première soupape double (15) est portée par un piston (8) mobile dans le carter et en ce qu'un siège (26) de soupape d'échappement pour ladite soupape double est porté par un premier desdits éléments

7 0 157 467 8

sensibles à la pression (24), ledit étranglement effectif étant situé dans une portion tubulaire (31) menée à partir dudit siège de soupape d'échappement.

3. Soupape de commande de pression de fluide pour systèmes multi-circuits suivant la revendication 1, caractérisée en ce que la première soupape double est portée par un piston (8) mobile dans le carter et qu'un siège de soupape d'échappement pour ladite soupape double est porté par un premier desdits éléments sensibles à la pression (24), et en ce que ladite seconde soupape double (20) est logée dans le carter et qu'un siège (27) de soupape d'échappement pour ladite seconde soupape double est porté par l'autre desdits éléments sensibles à la pression (25), ledit étranglement effectif étant situé dans une portion tubulaire menée à partir de ce dernier siège de soupape d'échappement.

4. Ensemble de soupape de commande de pression de fluide pour systèmes multi-circuits suivant les revendications 1, 2 ou 3, caractérisé en ce qu'une desdites pièces mutuellement déplaçables comprend une portion tubulaire (31) et en ce que l'autre desdites pièces mutuellement déplaçables comprend un organe d'étranglement (30) mobile dans la portion tubulaire.

5. Ensemble de soupape de commande de pression de fluide pour systèmes multi-circuits suivant la revendication 4, caractérisé en ce que l'organe d'étranglement (30) comporte un ou plusieurs créneaux périphériques (32) dont les bases se déplacent à une distance suffisante de la portion tubulaire (31) pour atténuer substantiellement l'étranglement de la portion tubulaire (31).

6. Soupape de commande de pression de fluide pour systèmes multi-circuits suivant l'une ou l'autre des revendications précédentes, caractérisée en ce que les dimensions et la précharge élastique (33, 34) entre lesdits éléments sensibles à la pression sont telles qu'en fonctionnement, pour augmenter les pressions de sortie, l'étranglement est déterminé en fonction de la pression de sortie atteinte avant d'ouvrir ladite soupape double pour relâcher la pression de sortie.